# FASCICULE DE BREVET EUROPEEN

(11) **EP 4 078 724 B1**
(45) Date de publication et mention de la délivrance du brevet: **05.08.2026**
(21) Numéro de dépôt: 20823840.2
(22) Date de dépôt: 15.12.2020
(51) Int. Cl.: H01Q 1/02, H01Q 1/32, H01Q 1/42, G01S 13/931, G01S 7/02, G01S 7/40, B60Q 1/00

(54) **RADÔME RÉTROÉCLAIRÉ, AVEC DISPOSITIF DE DÉGIVRAGE**
HINTERGRUNDBELEUCHTETES RADOM, DAS EINE ENTEISUNGSVORRICHTUNG UMFASST
BACKLIT RADOME COMPRISING A DE-ICING DEVICE

(30) Priorité: 16.12.2019 FR 1914532
(43) Date de publication de la demande: 26.10.2022
(73) Titulaire: OPmobility SE, 69007 Lyon (FR)
(72) Inventeur: DUBOST, Elise, 01150 SAINTE-JULIE (FR); STABLO, Frédéric, 01150 SAINTE-JULIE (FR)
(74) Mandataire: LLR
(86) Numéro de dépôt international: PCT/EP2020/086193
(87) Numéro de publication internationale: WO 2021/122578

(56) Documents cités:
- EP-A1- 3 252 494
- DE-A1- 102015 004 204
- DE-A1- 102016 007 119
- US-A1- 2018 046 183
- US-A1- 2019 356 046

## Description

L'invention concerne le domaine des véhicules automobiles équipés de radar, et plus particulièrement, le domaine des dispositifs pour masquer et protéger un tel radar, encore appelés « radômes ».

Le dispositif selon l'invention s'applique notamment pour les radars disposés dans le pare-choc avant ou arrière des véhicules, par exemple du type ACC.

Pour des raisons de sécurité notamment, il est connu d'équiper des véhicules automobiles de radars, par exemple de type ACC, selon l'expression anglo-saxonne « Adaptative Cruise Control ». Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

Les radars ACC sont montés en face avant ou arrière des véhicules, en général entre les barreaux de la grille, qui peut être une grille de refroidissement, mais aussi sur d'autres pièces de carrosserie comme des ailes, par exemple pour la détection des cyclistes.

Pour cacher ces radars pour des raisons esthétiques, et/ou pour les protéger des agressions extérieures (pluies, glace, givre, boues, insectes, feuilles...), il est connu d'utiliser un radôme, c'est à dire une pièce, ou dispositif de protection comportant un cache plastique positionné devant le radar.

Un tel cache plastique laisse passer les ondes radar avec une atténuation aussi faible que possible pour ne pas perturber le fonctionnement du radar lui-même.

Dans le but de renforcer l'effet esthétique produit par des éléments de carrosserie, il a été proposé de placer une source lumineuse en arrière de la surface du radôme de manière à faire apparaître un effet lumineux devant le radar lorsque la source de lumière est activée.

Ainsi, lorsque le dispositif optique est éteint, l'apparence du radôme est donnée par le revêtement de la couche externe de l'élément de carrosserie. A l'inverse, lorsque le dispositif optique est allumé, le radôme apparaît sous la forme d'une surface lumineuse.

En activant le dispositif d'éclairage, il est également possible de faire apparaître des motifs particuliers tels qu'un logo à la marque du constructeur, ou encore des éléments figuratifs particuliers qui restent invisibles lorsque le véhicule est éclairé par la lumière du jour.

On connaît ainsi de la demande WO2019/038107 du déposant, un radôme décoré composé d'un support opaque à la lumière et transparent aux ondes radar et d'un corps transparent aux ondes radar et à la lumière, entre lesquels est disposé un guide de lumière diffusant.

Cependant, les radars peuvent voir leur fonctionnement normal déréglé par la présence d'une couche de glace, de neige ou de givre en cas de température en dessous de 10 degrés Celsius car le mouvement du véhicule a un effet négatif sur la température. On peut donc observer des dépôts de givre même à des températures positives. Une couche de givre vient perturber le passage normal des ondes électromagnétiques et est une source d'erreur dans la mesure des paramètres physiques extérieurs.

Afin d'éviter le dépôt de givre, qui vient non seulement rendre le système d'assistance inutilisable, mais qui de surcroit peut générer de fausses alarmes, on prévoit un système de dégivrage sur le radôme.

Un tel système de dégivrage est traditionnellement formé d'une piste chauffante constituée de fils conducteurs capables de transformer une énergie électrique en énergie thermique par effet Joule, associée à deux plaques de connexion à chaque extrémité de la piste chauffante afin de l'alimenter en un courant électrique, le tout étant positionné sur un élément pour pièce de carrosserie et à proximité d'un capteur. L'énergie thermique ainsi dégagée permet de dégivrer localement la pièce dans le cas où une couche de givre s'est formée. La piste chauffante, pour éviter de perturber le passage des ondes électromagnétiques, doit être positionnée selon une géométrie particulière désignée dans ce qui suit par un positionnement « en serpentin ». Pour la clarté de l'exposé, on définit une piste chauffante positionnée en « serpentin » de la façon suivante : une piste chauffante en serpentin suit un trajet en boustrophédon, à savoir un trajet qui décrit des segments parallèles avec des virages à 180° entre deux segments qui tournent alternativement dans un sens, puis dans le sens opposé à ce sens avec une distance constante entre deux segments parallèles.

Par extension, une piste positionnée en serpentin désigne une piste configurée pour permettre le passage d'ondes électromagnétiques d'une plage de fréquences d'un radar.

En effet, l'exactitude du positionnement de la piste chauffante est très importante pour éviter qu'elle ne fasse obstacle au passage des ondes électromagnétiques, notamment le parallélisme entre les différents segments des pistes chauffantes et l'espacement entre ces pistes chauffantes doit être respecté très précisément. À chaque fréquence d'onde électromagnétique va correspondre une configuration du positionnement de la piste chauffante optimale pour que cette piste chauffante soit transparente vis-à-vis du passage de cette onde électromagnétique.

L'invention a notamment pour but de fournir un radôme décoré par rétroéclairage, permettant cependant un fonctionnement optimisé du radar, même dans des conditions de température où une couche de glace, de neige ou de givre aurait pu se former sur le radôme, notamment à des températures inférieures à 10 degrés Celsius.

On connaît de la demande DE102015004204 un dispositif de protection d'un radar de véhicule automobile comprenant un corps transparent aux ondes radar et à la lumière, un guide de lumière surfacique à travers lequel et à partir duquel est transmise la lumière, transparent aux ondes radar, un support opaque à la lumière et transparent aux ondes radar, et une piste chauffante électriquement conductrice positionnée sur une surface du corps transparent. Dans ce dispositif, la lumière sort du guide de lumière, par une surface de sortie sensiblement perpendiculaire à la surface extérieure du dispositif ; la surface de sortie est une petite surface du guide de lumière, correspondant sensiblement à son épaisseur et orientée latéralement par rapport au dispositif. Afin d'illuminer le radôme de façon uniforme, la lumière traversant le guide de lumière est renvoyée sur une surface réfléchissante disposée de manière à détourner la lumière vers l'extérieur du dispositif de protection du radar. Ce dispositif présente une structure complexe, nécessitant l'assemblage de nombreux éléments, et d'optimiser l'orientation de certains éléments par rapport à d'autres éléments, qui permette d'obtenir un éclairage adéquat. II y a donc un besoin en un dispositif de protection présentant les avantages exposés ci-avant, dont la fabrication est plus simple et moins coûteuse.

La demande DE102016007119 décrit un dispositif de protection d'un radar comprenant un guide de lumière similaire dans lequel la lumière est émise par une petite surface du guide de lumière, et est renvoyée sur une surface réfléchissante. Ce dispositif présente les mêmes inconvénients qu'énoncés ci-avant.

A cet effet l'invention a pour objet un dispositif de protection d'un radar de véhicule automobile, comprenant :
- un corps formé d'une matière transparente aux ondes radar et à la lumière,
- un élément éclairant surfacique transparent aux ondes radar, et
- un support opaque à la lumière et transparent aux ondes radar.
Le dispositif de protection comporte en outre une piste chauffante électriquement conductrice positionnée sur une surface du corps.
De façon avantageuse, l'élément éclairant surfacique est configuré pour que de la lumière soit émise par l'élément éclairant surfacique. Dans le présent texte, on considère qu'un objet émet de la lumière, par opposition à "réfléchit", lorsque la lumière sort de l'objet, c'est à dire que la lumière a transité à l'intérieur de celui-ci. Une lumière réfléchie par un objet n'est pas émise par l'objet car dans le cas de la réflexion, la lumière reste toujours extérieure à l'objet.
L'élément éclairant surfacique est avantageusement configuré pour émettre la lumière directement vers une surface externe du corps, à partir d'une face de l'élément éclairant surfacique présentant la plus grande surface de l'élément éclairant surfacique, située en regard de la surface externe du corps.

Ainsi, cette solution permet de fournir un radôme décoré rétroéclairé, compatible avec le fonctionnement du radar à des températures inférieures à 10 degrés Celsius, et donc même dans des conditions de température où une couche de glace, de neige ou de givre aurait pu se former sur le radôme. Dans ce radôme, l'élément éclairant surfacique éclaire directement, et de façon uniforme, le radôme, sans nécessiter de pièce intermédiaire pour obtenir cet éclairage. Ce radôme est plus simple et moins coûteux à fabriquer.

De ce fait, le radôme selon l'invention permet également d'équiper des véhicules classés niveau 4 et 5 dans la Classification de l'Organisation internationale des constructeurs automobiles (OICA). Il s'agit respectivement de véhicules capables de se déplacer sans leur conducteur dans certaines conditions pour le niveau 4, et dans toutes conditions pour le niveau 5. En effet dans ces véhicules, la fonction dégivrage du radôme est nécessaire.

Du fait que la piste chauffante est positionnée sur une surface du corps en matière transparente, le dégivrage est plus efficace car la piste chauffante est plus proche de la surface givrée, qui correspond à la surface extérieure du corps en matière transparente.

L'absorbance d'un milieu mesure la capacité de ce milieu à absorber l'onde électromagnétique qui le traverse. La transmission (ou transmittance) d'un milieu est définie comme l'inverse de l'absorbance. Il s'agit donc de la fraction du flux traversant le milieu. On parle de transparence pour la lumière visible. Ainsi, une matière est transparente à la lumière lorsqu'une fraction de la lumière visible la traverse.

Au sens de l'invention, on entend par « transparent aux ondes radar » une matière qui se laisse traverser par les ondes radar. L'épaisseur de matière transparente au radar va être fonction des caractéristiques diélectriques (permittivité et Tan Delta) de celle-ci et de la fréquence de fonctionnement du radar.

De manière non exhaustive, la matière transparente à la lumière et aux ondes radar peut être choisie parmi un thermoplastique ou un thermodur par exemple un polycarbonate, un polyamide, un polypropylène, un polyméthacrylate de méthyle, un copolyester, de l'acrylonitrile butadiène styrène, de l'acrilonitrile styrène acrylate, du styrène acrilonitrile, un mélange d'acrilonitrile styrène acrylate et de polycarbonate, un mélange de polycarbonate et polytéréphtalate d'éthylène, une résine epoxy, un polyurethane.

Par « élément éclairant surfacique», on entend un produit mince, dans lequel l'épaisseur est très petite par rapport à la longueur et à la largeur, par exemple un tissu ou un film éclairant. L'épaisseur de l'élément éclairant surfacique est de l'ordre de 1 mm. Un élément « surfacique » prend la forme de l'objet à la surface duquel il est posé. L'élément éclairant surfacique peut diffuser de la lumière de façon uniforme, de manière à éclairer de façon uniforme le radôme.

De façon avantageuse, la lumière est diffusée par l'élément éclairant surfacique. On entend par « diffusion de lumière », sa transmission dans plusieurs directions. Ce mode de transmission de la lumière permet de distribuer un flux lumineux sensiblement constant en tout point de la surface de sortie de l'élément éclairant. L'effet de style obtenu est de créer un halo lumineux distribué de manière régulière tout le long de la partie du radôme sur laquelle il est disposé.

Suivant d'autres caractéristiques optionnelles du dispositif de protection de radar, prises seules ou en combinaison :
- L'élément éclairant surfacique est un tissu éclairant.
   Dans la présente description, on entend généralement par « tissu éclairant » un ensemble de fibres naturelles et/ou synthétiques comprenant des fibres optiques combinées avec des mailles du tissu. Ces fibres optiques sont généralement raccordées à une source lumineuse, telle qu'une ou plusieurs diodes. Ces fibres optiques peuvent être éclairées à partir de l'une ou de chacune de leurs extrémités jouant le rôle de portion d'alimentation, afin de rendre lumineuse la pièce de tissu correspondant. Dans ces tissus éclairants, les fibres optiques constituent généralement des fils de trame et ou les fils de chaîne, et sont éventuellement associées à des fibres classiques, naturelles ou synthétiques, comme par exemple du polyester, du moment qu'elles sont transparentes aux ondes radar.

Un avantage du tissu éclairant réside dans le fait qu'il peut être facile à personnaliser en variant les couleurs de la lumière et/ou des motifs disposés sur le tissu. De plus, la possibilité d'utiliser, grâce au tissu éclairant, une source de lumière déportée est un avantage particulièrement intéressant car cela permet de disposer le système d'éclairage, qui est généralement très couteux, dans une zone non endommagée lors d'un crash et/ou très facilement accessible. Enfin, le tissu éclairant présente une bonne transparence aux ondes radar.
- L'élément éclairant surfacique est un film éclairant. Le film éclairant produit et diffuse sa propre lumière. L'utilisation d'un film éclairant permet donc de simplifier la fabrication du dispositif de protection d'un radar car il n'y a alors pas besoin d'une source de lumière déportée et d'un guide-lumière et/ou d'une surface réfléchissante supplémentaire .
- Le dispositif comporte en outre un revêtement de décor, ou une texture de surface.
- La piste chauffante comprend une partie de connexion qui est située en dehors d'un cône d'émission du radar. Ainsi la partie de connexion ne perturbera pas le fonctionnement du radar.
- Le corps comprend une zone opaque à la lumière. La partie de connexion peut ainsi être dissimulée derrière la zone opaque du corps en matière transparente.
- La piste chauffante comprend une partie chauffante qui s'étend sur une surface d'intersection entre le corps et le cône d'émission du radar. Il en résultera un dégivrage homogène et complet de la partie du radôme qui se situe dans le cône d'émission.
- L'élément éclairant surfacique s'étend au moins sur une partie d'une surface d'intersection entre le support et le cône d'émission du radar.
- L'élément éclairant surfacique est fixé dans une dépression du support.
- Au moins toute la largeur de la dépression du support est contenue dans le cône d'émission du radar.
- La dépression du support s'étend sur une partie de la surface d'intersection entre le support et le cône, et l'épaisseur totale de l'élément éclairant surfacique, également appelé « feuille éclairante », et du support au niveau de la dépression est identique à l'épaisseur du support dans des parties du support extérieures à la dépression. Ceci permet de maintenir constante l'épaisseur totale dans le cône d'émission, et de conserver ainsi une bonne transparence aux ondes radar.
- La piste chauffante est positionnée sur une surface interne du corps. Le terme « interne » désigne dans la présente description une partie d'un élément ou un élément situé vers l'intérieur du véhicule, ici situé en direction du radar, alors que le terme « externe » désigne une partie d'un élément ou un élément situé vers l'extérieur du véhicule, à l'opposé du radar. Par rapport à un positionnement sur une surface externe du corps en matière transparente, cette solution permet de protéger la piste chauffante ; c'est une solution plus durable. La durée de vie du radôme décoré est ainsi prolongée. Par ailleurs, cette solution est plus esthétique car la piste chauffante forme des aspérités qui, si elles étaient positionnées sur une surface externe du corps, altèreraient l'aspect du radôme.
- L'élément éclairant surfacique est fixé sur une surface externe du support. Cette configuration permet de protéger l'élément éclairant surfacique et de le positionner dans le cône du radar, même lorsque la piste chauffante est elle-même positionnée sur la surface interne du corps. En effet, il est difficilement envisageable de poser la piste chauffante et l'élément éclairant surfacique sur la même surface.
- Le revêtement de décor ou la texture de surface est localisé sur une surface externe du corps. Ainsi, la piste chauffante et le revêtement de décor peuvent coexister dans la partie éclairée par l'élément éclairant surfacique.
- Le corps formé d'une matière transparente aux ondes radar et à la lumière et le support opaque à la lumière et transparent aux ondes radar sont deux pièces distinctes.

### Brève description des figures

L'invention sera mieux comprise à la lecture de la description qui va suivre donnée uniquement à titre d'exemple et faite en se référant aux dessins annexés dans lesquels :
[Fig. 1] la figure 1 ;
[Fig. 2] la figure 2 ;
[Fig. 3] la figures 3 ; et
[Fig. 4] la figure 4 sont des vues de dessus schématiques en section d'un radar et d'un radôme selon des modes de réalisation de l'invention, les radômes étant représentés en éclaté.
[Fig. 5] la figure 5 est une vue de dessus schématique en section du radar et du radôme de la figure 2, en assemblé.
[Fig. 6] la figure 6 est une vue de dessus en perspective d'un radar et d'un radôme selon un mode de réalisation de l'invention.

### Description détaillée

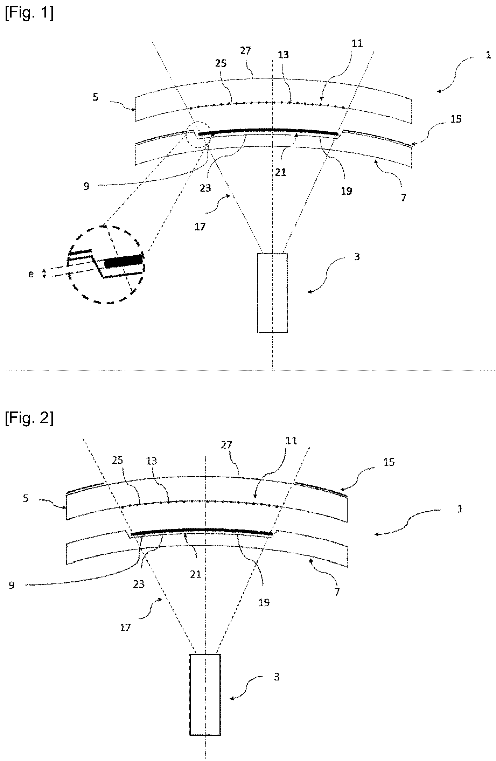

On a représenté sur la figure 1 un dispositif de protection d'un radar de véhicule automobile selon un premier mode de réalisation de l'invention, désigné par la référence générale 1. Ce radôme 1 est représenté avec le radar 3 qu'il protège. Le radôme 1 comprend un corps 5 formé d'une matière transparente aux ondes radar et à la lumière et un support 7 opaque à la lumière et transparent aux ondes radar. Le corps 5 et le support 7 sont deux pièces distinctes. Le radôme 1 comprend également un élément éclairant surfacique 9 et une piste chauffante 11 électriquement conductrice. L'élément éclairant surfacique 9 émet la lumière directement vers la surface externe 27 du corps 5, à partir d'une face 33 de l'élément éclairant surfacique 9 présentant la plus grande surface de l'élément éclairant surfacique 9, qui est située en regard de la surface externe 27 du corps 5. Plus précisément, la lumière est diffusée par l'élément éclairant surfacique 9. L'élément éclairant surfacique 9 est un produit mince, dans lequel l'épaisseur e est très petite par rapport à la longueur L et à la largeur I. La surface 33 de l'élément éclairant surfacique 9 est sa plus grande surface, définie par la longueur L et la largeur I de l'élément éclairant surfacique 9. Dans la présente description, les termes « largeur » et « longueur » d'un objet (ici l'élément éclairant surfacique), désignent la largeur et la longueur de la plus grande surface de l'objet. L'épaisseur e est la plus petite dimension de l'objet. La piste chauffante 11 est positionnée sur une surface 13 interne du corps 5. Le radôme 1 comporte également un revêtement de décor 15. On a également représenté sur la figure 1 un cône 17 d'émission du radar 3. Dans ce mode de réalisation, l'élément éclairant surfacique 9 est fixé sur une surface 19 externe du support 7, dans une dépression 21 du support 7. De plus, l'élément éclairant surfacique 9 s'étend sur une surface d'intersection 23 entre le support 7 et le cône 17 d'émission du radar 3. Dans ce mode de réalisation, la piste chauffante 11 s'étend sur une surface d'intersection 25 entre le corps 5 et le cône 17 d'émission du radar 3. Comme l'élément éclairant surfacique 9, dans ce mode de réalisation, le revêtement de décor 15 est situé sur une surface 19 externe du support 7. Dans ce mode de réalisation, le revêtement de décor 15 est situé à l'extérieur du cône 17 d'émission du radar. De ce fait, il n'est pas nécessaire que le revêtement 15 soit transparent aux ondes radar.

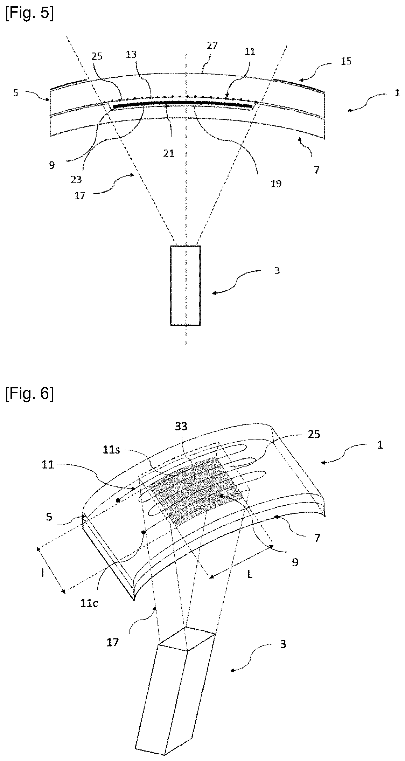

Dans les autres modes de réalisation, les mêmes références numériques désignent des éléments similaires. Ces modes de réalisation se distinguent du mode de réalisation de la figure 1 en ce que :
Dans le mode de réalisation des figures 2 et 5, le revêtement de décor 15 est localisé sur une surface externe 27 du corps 5.

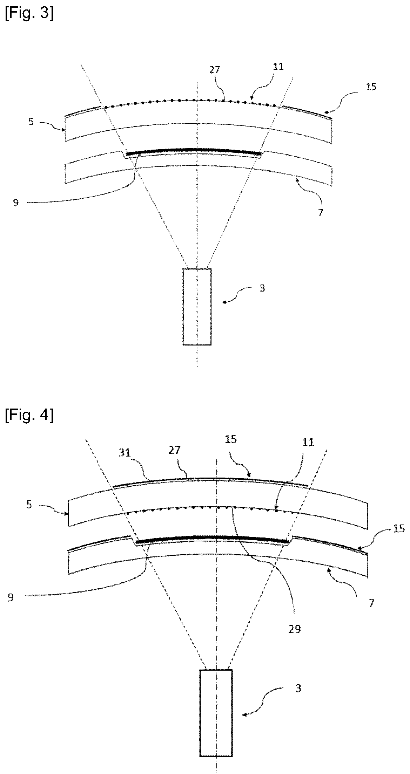

Il en est de même dans le mode de réalisation de la figure 3. Par ailleurs, dans ce mode de réalisation, la piste chauffante 11 est positionnée sur une surface externe 27 du corps 5.

Le mode de réalisation de la figure 4 comporte deux sortes de revêtements de décor 15. L'un est positionné comme dans le mode de réalisation de la figure 1. L'autre est positionné sur la surface externe 27 du corps 5, sur une surface d'intersection 31 entre le corps 5 et le cône 17 d'émission du radar 3.

En se référant à la figure 6, on voit la piste chauffante 11 positionnée et fixée sur une surface du corps 5. Cette piste chauffante 11 comporte une partie de connexion 11c et une partie chauffante, ici en serpentin, de dégivrage 11s. La partie en serpentin 11s de dégivrage de la piste chauffante 11 est positionnée selon une disposition compatible avec le passage d'ondes électromagnétiques à travers le corps 5. Dans l'exemple décrit, la partie en serpentin 11s de dégivrage de la piste chauffante 11 suit un trajet en boustrophédon. La partie en serpentin 11s de la piste chauffante 11 est un bon conducteur thermique et est transparente aux ondes radar et à la lumière. Dans cet exemple, elle comprend un fil métallique de diamètre inférieur à 100 µm. Le fil métallique a été déposé sur le corps par dépose 3D. Le fil métallique aurait également pu être déposé par ultrason sur un film chimiquement compatible avec le matériau du corps en matière transparente, le film étant lui-même déposé sur le corps lors du surmoulage. La partie chauffante 11s pourrait également être basée sur des encres conductrices, des nanomèches métalliques (cuivre, argent ou tout autre métal permettant une bonne conduction thermique et une transparence aux ondes), ou des nanotubes de carbone. Dans ce cas le design n'est pas en serpentin ; il s'agit d'un système chauffant conducteur alimenté par deux busbars de part et d'autre de cette zone chauffante. Le design de ces systèmes permet également d'être transparent à la fréquence du radar.

La partie chauffante 11s de la piste chauffante 11 s'étend sur une surface d'intersection 25 entre le corps 5 et le cône 17 d'émission du radar 3. La partie de connexion 11c de la piste chauffante 11 est située en dehors du cône 17 d'émission du radar 3. Un revêtement de décor, non représenté, est déposé sur la surface externe 19 du support 7. Le revêtement de décor pourrait également être sur une surface interne 29 ou externe 27 du corps 5. Il peut être situé à l'intérieur ou à l'extérieur d'une surface d'intersection avec le cône 17 du radar. Dans le cas où il est situé à l'intérieur du cône 17 du radar 3, il devra être transparent aux ondes radar, comme par exemple décrit dans la demande WO2019/038107 du déposant. Ainsi, il pourrait être gravé au laser. Le décor pourrait être également une texture de surface. Le corps 5 comporte deux zones opaques à la lumière, non représentées, derrière lesquelles les parties de connexion 11c de la piste chauffante 11 sont dissimulées.

Dans tous les modes de réalisation représentés, l'élément éclairant surfacique 9 est un tissu lumineux.

Par ailleurs, bien que l'élément éclairant des modes de réalisation représentés s'étend sur toute la surface d'intersection entre le support et le cône d'émission du radar, il pourrait également ne s'étendre que sur une partie de celle-ci. Dans ce cas, l'épaisseur totale de l'élément éclairant et du support au niveau de la dépression sera avantageusement identique à l'épaisseur du support dans des parties de celui-ci extérieures à la dépression. Ceci permettra de maintenir constante l'épaisseur totale dans le cône d'émission, et de conserver ainsi une bonne transparence aux ondes radar. Toute autre configuration permettant de conserver une épaisseur constante du radôme dans le cône d'émission du radar pourra également être mise en oeuvre.

L'invention n'est pas limitée aux modes de réalisation présentés et d'autres modes de réalisation apparaîtront clairement à l'homme du métier.

Il est notamment possible d'utiliser comme élément éclairant surfacique tout élément connu de l'homme du métier et présentant les qualités requises, à savoir des dimensions adaptées (épaisseur très petite par rapport à la longueur et à la largeur), une capacité à diffuser de la lumière et la transparence aux ondes radar, par exemple un film lumineux.

A la place d'un revêtement de décor, il est également possible d'utiliser une texture de surface.

L'élément éclairant pourrait être fixé en un autre endroit du radôme, permettant la diffusion de la lumière vers l'extérieur du radôme, et permettant le positionnement de la piste chauffante sur le corps.

### Liste de références

1 : radôme,
3 : radar,
5 : corps transparent aux ondes radar et à la lumière,
7 : support opaque à la lumière et transparent aux ondes radar,
9 : élément éclairant surfacique,
11 : piste chauffante,
11c : partie de connexion de la piste chauffante,
11s : partie en serpentin de la piste chauffante,
13 : surface interne du corps 5,
15 : revêtement de décor,
17 : cône d'émission du radar,
19 : surface externe du support,
21 : dépression du support,
23 : surface d'intersection entre le support et le cône d'émission du radar,
25 : surface d'intersection entre le corps et le cône d'émission du radar,
27 : surface externe du corps 5,
29 : surface interne du corps 5,
31 : surface d'intersection entre le corps 5 et le cône d'émission du radar,
33 : surface de l'élément éclairant surfacique,
e : épaisseur de l'élément éclairant surfacique
L : longueur de l'élément éclairant surfacique,
I : largeur de l'élément éclairant surfacique.

## Revendications

1. Dispositif (1) de protection d'un radar (3) de véhicule automobile, comprenant :
- un corps (5) formé d'une matière transparente aux ondes radar et à la lumière,
- un élément éclairant surfacique (9) transparent aux ondes radar, configuré pour que de la lumière soit émise par l'élément éclairant surfacique (9),
- un support (7) opaque à la lumière et transparent aux ondes radar,
- une piste chauffante (11) électriquement conductrice positionnée sur une surface (13) du corps (5),
**caractérisé en ce que** l'élément éclairant surfacique (9) est configuré pour émettre la lumière directement vers une surface externe (27) du corps (5), à partir d'une face (33) de l'élément éclairant surfacique présentant la plus grande surface de l'élément éclairant surfacique (9), située en regard de la surface externe (27) du corps (5).

2. Dispositif (1) selon la revendication précédente, l'élément éclairant surfacique (9) étant un tissu ou un film éclairant.

3. Dispositif (1) selon l'une quelconque des revendications précédentes, qui comporte en outre un revêtement de décor (15), ou une texture de surface.

4. Dispositif (1) selon l'une quelconque des revendications précédentes, dans lequel la piste chauffante (11) comprend une partie de connexion (11c) qui est située en dehors d'un cône (17) d'émission du radar (3).

5. Dispositif (1) selon l'une quelconque des revendications précédentes, dans lequel le corps (5) comprend une zone opaque à la lumière.

6. Dispositif (1) selon l'une quelconque des revendications précédentes, dans lequel la piste chauffante (11) comprend une partie chauffante (11s) qui s'étend sur une surface d'intersection (25) entre le corps (5) et le cône (17) d'émission du radar (3).

7. Dispositif (1) selon l'une quelconque des revendications précédentes, dans lequel l'élément éclairant surfacique (9) s'étend au moins sur une partie d'une surface d'intersection (23) entre le support (7) et le cône (17) d'émission du radar (3).

8. Dispositif (1) selon l'une quelconque des revendications précédentes, dans lequel l'élément éclairant surfacique (9) est fixé dans une dépression (21) du support (7).

9. Dispositif (1) selon l'une quelconque des revendications précédentes, dans lequel la piste chauffante (11) est positionnée sur une surface (13) interne du corps (5).

10. Dispositif (1) selon la revendication précédente, dans lequel l'élément éclairant surfacique (9) est fixé sur une surface externe (19) du support (7).

11. Dispositif (1) selon la revendication précédente et la revendication 3, dans lequel le revêtement de décor (15) ou la texture de surface est localisé sur une surface externe (27) du corps (5).

12. Dispositif (1) selon l'une quelconque des revendications précédentes, dans lequel le corps (5) formé d'une matière transparente aux ondes radar et à la lumière et le support (7) opaque à la lumière et transparent aux ondes radar sont deux pièces distinctes.

## Patentansprüche

1. Schutzvorrichtung (1) für einen Radar (3) eines Kraftfahrzeugs, umfassend:
- einen Körper (5), der aus einem Material gebildet ist, das für Radarwellen und für Licht durchlässig ist,
- ein flächiges Leuchtelement (9), das für Radarwellen durchlässig ist und so ausgebildet ist, dass Licht von dem flächigen Leuchtelement (9) emittiert wird,
- einen Träger (7), der für Licht undurchlässig und für Radarwellen durchlässig ist,
- einen elektrisch leitenden Heizstrang (11), der auf einer Oberfläche (13) des Körpers (5) positioniert ist,
**dadurch gekennzeichnet, dass** das flächige Leuchtelement (9) so ausgebildet ist, dass das Licht unmittelbar zu einer Außenfläche (27) des Körpers (5) hin von einer Fläche (33) des flächigen Leuchtelements aus, die die größte Oberfläche des flächigen Leuchtelements (9) aufweist, die sich der Außenfläche (27) des Körpers (5) gegenüber befindet, emittiert wird.

2. Vorrichtung (1) nach dem vorhergehenden Anspruch, wobei das flächige Leuchtelement (9) ein leuchtendes Gewebe oder eine leuchtende Folie ist.

3. Vorrichtung (1) nach einem der vorhergehenden Ansprüche, die ferner eine Dekorbeschichtung (15) oder eine Oberflächentextur aufweist.

4. Vorrichtung (1) nach einem der vorhergehenden Ansprüche, wobei der Heizstrang (11) einen Verbindungsteil (11c) aufweist, der sich außerhalb eines Abstrahlkegels (17) des Radars (3) befindet.

5. Vorrichtung (1) nach einem der vorhergehenden Ansprüche, wobei der Körper (5) eine Zone umfasst, die für Licht undurchlässig ist.

6. Vorrichtung (1) nach einem der vorhergehenden Ansprüche, wobei der Heizstrang (11) einen Heizteil (11s) umfasst, der sich über eine Schnittfläche (25) zwischen dem Körper (5) und dem Abstrahlkegel (17) des Radars (3) erstreckt.

7. Vorrichtung (1) nach einem der vorhergehenden Ansprüche, wobei das flächige Leuchtelement (9) sich über mindestens einen Teil einer Schnittfläche (23) zwischen dem Träger (7) und dem Abstrahlkegel (17) des Radars (3) erstreckt.

8. Vorrichtung (1) nach einem der vorhergehenden Ansprüche, wobei das flächige Leuchtelement (9) in einer Vertiefung (21) des Trägers (7) befestigt ist.

9. Vorrichtung (1) nach einem der vorhergehenden Ansprüche, wobei der Heizstrang (11) auf einer Innenfläche (13) des Körpers (5) positioniert ist.

10. Vorrichtung (1) nach dem vorhergehenden Anspruch, wobei das flächige Leuchtelement (9) auf einer Außenfläche (19) des Trägers (7) positioniert ist.

11. Vorrichtung (1) nach dem vorhergehenden Anspruch und Anspruch 3, wobei die Dekorbeschichtung (15) oder die Oberflächentextur sich auf einer Außenfläche (27) des Körpers (5) befindet.

12. Vorrichtung (1) nach einem der vorhergehenden Ansprüche, wobei der Körper (5), der aus einem Material gebildet ist, das für Radarwellen und für Licht durchlässig ist, und der Träger (7), der für Licht undurchlässig und für Radarwellen durchlässig ist, zwei verschiedene Teile sind.

## Claims

1. A device (1) for protecting a motor vehicle radar (3), comprising:
- a body (5) made of a material transparent to radar waves and light,
- a surface lighting element (9) transparent to radar waves, configured so that light is emitted by the surface lighting element (9),
- a support (7) that is opaque to light and transparent to radar waves,
- an electrically conductive heating track (11) positioned on a surface (13) of the body (5),
**characterized in that** the surface lighting element (9) is configured to emit light directly toward an outer surface (27) of the body (5), from a face (33) of the surface lighting element having the largest surface area of the surface lighting element (9), facing the outer surface (27) of the body (5).

2. A device (1) according to the preceding claim, wherein the surface lighting element (9) is a luminous fabric or film.

3. A device (1) according to any one of the preceding claims, which further comprises a decorative coating (15) or a surface texture.

4. A device (1) according to any of the preceding claims, wherein the heating track (11) comprises a connection portion (11c) that is located outside a radar (3) emission cone (17).

5. A device (1) according to any of the preceding claims, wherein the body (5) comprises a light-opaque zone.

6. A device (1) according to any one of the preceding claims, wherein the heating track (11) comprises a heating portion (11s) that extends over an intersection surface (25) between the body (5) and the emission cone (17) of the radar (3).

7. A device (1) according to any one of the preceding claims, wherein the surface lighting element (9) extends over at least a portion of an intersection surface (23) between the support (7) and the emission cone (17) of the radar (3).

8. A device (1) according to any one of the preceding claims, wherein the surface lighting element (9) is secured in a recess (21) of the support (7).

9. A device (1) according to any one of the preceding claims, wherein the heating track (11) is positioned on an inner surface (13) of the body (5).

10. A device (1) according to the preceding claim, wherein the surface lighting element (9) is secured to an outer surface (19) of the support (7).

11. A device (1) according to the preceding claim and claim 3, wherein the decorative coating (15) or surface texture is located on an outer surface (27) of the body (5).

12. A device (1) according to any one of the preceding claims, wherein the body (5), formed of a material transparent to radar waves and light, and the support (7), which is opaque to light and transparent to radar waves, are two separate parts.
